# FASCICULE DE BREVET EUROPEEN

(11) **EP 1 032 182 B1**
(45) Date de publication et mention de la délivrance du brevet: **10.04.2002**
(21) Numéro de dépôt: 00400323.2
(22) Date de dépôt: 04.02.2000
(51) Int. Cl.: H04M 1/19, H04M 1/02

(54) **Téléphone mobile comportant un dispositif d'amplification audio**
Akustische Verstärkervorrichtung für ein Mobiltelefon
Mobile phone having an acoustic amplification device

(30) Priorité: 17.02.1999 FR 9901943
(43) Date de publication de la demande: 30.08.2000
(73) Titulaire: SAGEM S.A., 75015 Paris (FR)
(72) Inventeur: Anciant, Marc, 95000 Cergy (FR)
(74) Mandataire: Schmit, Christian Norbert Marie

(56) Documents cités:
- FR-A- 2 624 296
- GB-A- 2 292 650
- US-A- 5 703 946
- US-A- 5 778 062
- PATENT ABSTRACTS OF JAPAN vol. 199, no. 610, 31 octobre 1996 (1996-10-31) & JP 08 154119 A (SHIBAZAKI HIDEO), 11 juin 1996 (1996-06-11)

## Description

La présente invention a pour objet un téléphone mobile comportant un dispositif d'amplification audio. Son domaine d'application est celui de la téléphonie mobile. Le but de l'invention est de permettre à un utilisateur d'un téléphone mobile de se trouver à une certaine distance de son appareil, et de continuer à percevoir de façon satisfaisante les sons émis par le téléphone mobile.

De nos jours les téléphones mobiles sont des objets de consommation courante. Ils sont notamment des outils de travail. Ils peuvent être utilisés dans des environnements bruyants et/ou dangereux. Une telle utilisation dangeureuse est rencontrée dans le cas de la voiture. Il est vivement déconseillé de téléphoner en conduisant, sauf à utiliser un kit mains libres. Un tel kit permet au conducteur de garder les mains sur le volant et de suivre une conversation téléphonique. Le kit est chargé d'amplifier les sons. De tels kits peuvent aussi être utilisés dans un environnement de bureau, lorsque l'utilisateur du téléphone mobile souhaite que plusieurs personnes puissent suivre la conversation.

A l'heure actuelle la mise en oeuvre de tels kits réclame un support pour recevoir le téléphone mobile, un circuit électrique annexe pour l'amplification et la diffusion des sons, et des connecteurs pour relier le téléphone mobile à ce circuit annexe. Le tout forme un dispositif onéreux dont la mise en place ne va pas sans quelques aménagements. En effet, il faut fixer le support qui en général comporte le circuit annexe. Ce dernier doit en outre être alimenté grâce à une batterie mais, dans ce cas son autonomie est limitée. Ou bien, le circuit annexe est alimenté par la batterie du véhicule ou par l'allume-cigares. Un oubli de mise hors service peut vider la batterie du véhicule. Un tel kit est visible et ne peut donc pas être laissé en place dans le véhicule par crainte d'un vol éventuel.

Une autre solution connue est d'utiliser un téléphone mobile à écoute amplifiée. Mais pour une écoute lointaine le volume de l'amplification doit être réglé au maximum, ce qui entraîne une consommation excessive, donc une réduction de l'autonomie du téléphone mobile. De plus amplificateur et haut-parleur fonctionnent proches de leur régime de saturation, ce qui réduit fortement la qualité de l'écoute. Néanmoins cette solution est déjà plu avantageuse que la précédente puisqu'elle ne nécessite la mise en oeuvre que d'un support pour le téléphone mobile.

Mais ces deux solutions et les solutions proposées dans les documents US 5 778 062, GB 2 292 650 et JP 06 331 314, se révèlent encore insuffisante dans des environnements bruyants comme un l'intérieur d'un véhicule.

L'invention résout le problème en ajoutant aux dispositifs précédents un cornet acoustique. Ce cornet focalise la diffusion acoustique des organes audio du téléphone mobile ou du kit mains libres. Ce qui aura pour effet d'amplifier le signal sonore.

L'invention a donc pour objet un téléphone mobile comportant un dispositif d'amplification d'une sortie audio, caractérisé en ce que
- le dispositif d'amplification comporte un cornet acoustique amovible, rigide, et pourvu e moyens de fixation au téléphone mobile, et
- la face interne du cornet est en vis à vis d'une sortie audio du téléphone mobile.

L'invention sera mieux comprise à la lecture de la description qui suit et à l'examen des figures qui l'accompagnent. Celles-ci ne sont présentées qu'à titre indicatif et nullement limitaif de l'invention. Les figures montrent :
- Figure 1 : une illustration d'un téléphone mobile et d'un cornet acoustique selon l'invention. Le cornet, dans ce cas, est muni d'une pince enserrant le téléphone mobile ;
- Figure 2 : une illustration d'un téléphone mobile comportant des rainures, et d'un cornet acoustique selon l'invention possédant des ergots coulissant dans les rainures.
- Figure 3 : une illustration grossière de la propagation des ondes acoustiques émises par le haut-parleur d'un téléphone mobile muni d'un cornet acoustique selon l'invention, et le phénomène d'amplification qui en résulte.

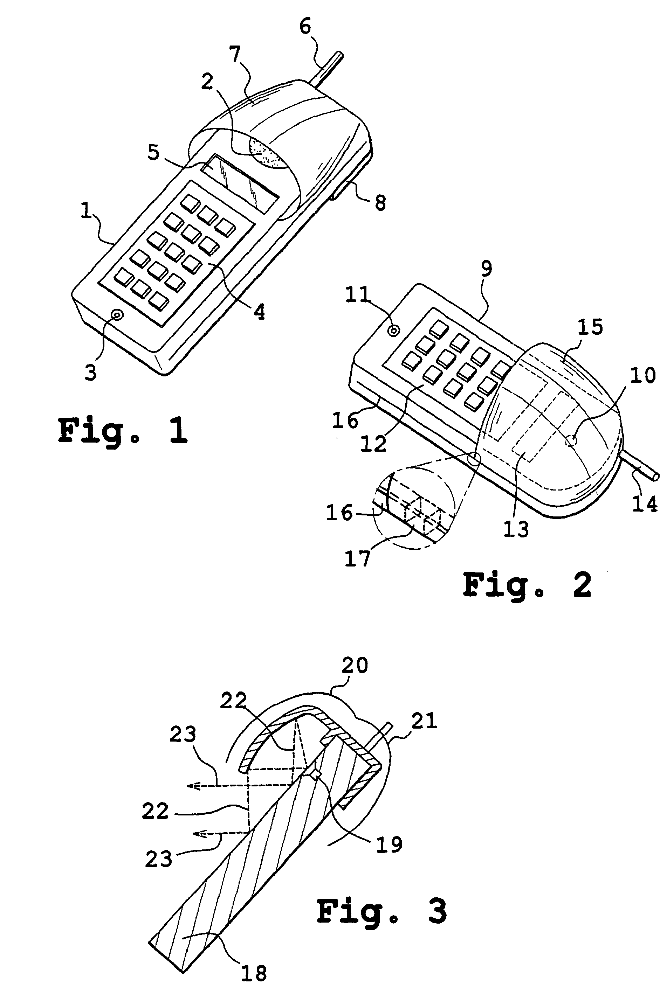

La figure 1 montre un téléphone 1 mobile comportant des éléments caractéristiques suivants: une sortie 2 audio, une entrée 3 audio, un clavier 4, un afficheur 5 LCD et une antenne 6. Le téléphone 1 est muni d'un dispositif d'amplification dont un organe visible selon l'invention est un cornet 7 acoustique. Le cornet 7 est doté d'une pince 8 de fixation au téléphone mobile. La pince 8 enserre par des pattes les faces avant et arrière du téléphone 1. La pince 8 maintient en place le dispositif d'amplification, le cornet 7 en vis à vis de la sortie 2. Ainsi monté, le cornet 7 forme, avec une face avant du téléphone 1 d'où débouche la sortie 2 audio, une conque jouant un rôle de porte-voie. Un téléphone mobile ayant une base et un sommet, généralement une sortie audio est située prés du sommet. Dans ce cas la conque ou le porte-voie réalisé par le cornet utilise la partie supérieure de la face avant du téléphone. Le cornet 7 est en vis à vis de la sortie 2 car une normale à une paroie du cornet coupe la face avant du téléphone.

La figure 2 montre un téléphone 9 mobile comportant des éléments caractéristiques, respectivement 10 à 14, identiques à ceux du téléphone 1. Le téléphone 9 comporte en outre une rainure 16, faisant par exemple le tour du téléphone. Le téléphone 9 comporte également un dispositif d'amplification formé d'un cornet 15 acoustique. Le cornet 15 comporte des ergots 17. Telle que représentée la rainure 16 a une section carrée. Les ergots 17 ont aussi une section carrée légèrement plus petite afin de pouvoir coulisser dans la rainure. Cependant dans une variante de l'invention on peut envisager une rainure et des ergots ayant des sections différentes : un ergot triangulaire peut tès bien coulisser dans une rainure à section carrée. Une fois le dispositif d'amplification en place, le cornet 15 est en vis à vis de la sortie 10 audio.

La figure 3 représente en coupe un téléphone 18 mobile comportant un haut-parleur 19, et muni d'un cornet 20 d'amplification. Le cornet 20 a une courbure de forme parabolique. Il est fixé par une pince 21 au téléphone 18.

Une fois le dispositif d'amplification mis en place, un utilisateur d'un téléphone mobile ne peut plus porter le téléphone à son oreille. Par contre les claviers, 4 et 12, restent accessibles et les écrans, 5 et 13, lisibles. Le dispositif d'amplification, dans l'accomplissement de sa fonction, ne perturbe pas l'utilisation du téléphone mobile, numérotation, réponse à un appel entrant, consultation d'un répertoire.

De plus le dispositif d'amplification est conçu de telle sorte que le haut-parleur 19 se trouve au foyer de la parabole matérialisée par le cornet 20 et la paroie du téléphone mobile. Ainsi tous les sons émis par le haut-parleur 19 seront réfléchis dans une même direction 22, vers la face avant du téléphone 18. La face avant du téléphone 18 les réfléchira à son tour dans une autre direction 23 commune. On obtient donc ainsi une source sonore directionnelle, moins dispersive qu'un haut-parleur standard, donc avec un gain de puissance par rapport à celui-ci. Ce gain est obtenu dans la direction de la source. Cela implique que l'utilisateur d'un téléphone mobile muni d'un dispositif d'amplification selon l'invention doit positionner correctement ce téléphone mobile. Toutefois cette opération de positionnement est bien connue puisqu'il faut aussi l'effectuer dans le cas d'utilisation d'un kit mains libres pour voiture.

Les kits mains libres peuvent se révéler comme ayant une amplification insuffisante. Le dispositif d'amplification selon l'invention leur est adapté de manière simple. Le cornet acoustique est maintenu en vis à vis de la sortie audio d'un kit mains libres a l'aide d'une pince qui enserre au moins deux faces opposées du kit. Une fois le dispositif mis en place, la sortie audio du kit se trouve au foyer de la parabole matérialisée par le cornet du dispositif.

Le dispositif fonctionnant sur la sortie audio peut également être adapté à l'entrée audio, en rendant le microphone directionnel.

Par ailleurs un kit main libre peut également être utilisé dans le domaine du bureau.

## Revendications

1. Téléphone mobile comportant un dispositif d'amplification d'une sortie audio, **caractérisé en ce que** :
- le dispositif d'amplification comporte un cornet (7, 15, 20) acoustique amovible, rigide et pourvu de moyens de fixation au téléphone mobile,
- la face interne du cornet est en vis à vis d'une sortie (19) audio du téléphone mobile.

2. Téléphone mobile selon la revendication 1, **caractérisé en ce que** le cornet acoustique a une courbure (20) parabolique.

3. Téléphone mobile selon l'une des revendications 1 ou 2, **caractérisé en ce que** le dispositif d'amplification comporte des ergots (17), le téléphone mobile comporte des rainures (16), les ergots coulissent dans les rainures.

4. Téléphone mobile selon l'une des revendications 1 à 3, **caractérisé en ce que** le dispositif d'amplification comporte une pince (8, 21) qui enserre le téléphone mobile.

5. Téléphone mobile selon l'une des revendications 1 à 4, modifiée en ce qu'il comporte un kit mains libres, notamment de voiture, possédant des rainures, les ergots du dispositif d'amplification coulissent dans ces rainures, une des faces du cornet est en vis à vis de la sortie audio du kit mains libres.

6. Téléphone mobile selon l'une des revendications 1 à 4, modifiée en ce qu'il comporte un kit mains libres, notamment de voiture, le dispositif d'amplification comporte une pince qui enserre le kit main libre, une des faces du cornet est en vis à vis de la sortie audio du kit mains libres.

## Claims

1. Mobile phone comprising a device for amplification of an audio output, **characterised in that**:
- the amplification device comprises a detachable, rigid acoustic horn (7, 15, 20) provided with means for fixture to the mobile telephone,
- the internal face of the horn lies opposite an audio output (19) of the mobile telephone.

2. Mobile telephone according to claim 1, **characterised in that** the acoustic horn has a parabolic curvature (20).

3. Mobile telephone according to one of claims 1 or 2, **characterised in that** the amplification device comprises lugs (17), the mobile telephone comprises grooves (16), the lugs slide in the grooves.

4. Mobile telephone according to one of claims 1 to 3, **characterised in that** the amplification device comprises a clamp (8, 21) which grips the mobile telephone.

5. Mobile telephone according to one of claims 1 to 4, modified in that it comprises a hands free kit, in particular for a motor vehicle, having grooves, the lugs of the amplification device slide in these grooves, one of the faces of the horn lies opposite the audio output of the hands free kit.

6. Mobile telephone according to one of claims 1 to 4, modified in that it comprises a hands free kit, in particular for a motor vehicle, the amplification device comprises a clamp which grips the hands free kit, one of the faces of the horn lies opposite the audio output of the hands free kit.

## Patentansprüche

1. Mobiltelefon mit einer Verstärkervorrichtung für einen Tonsignal-Ausgang, **dadurch gekennzeichnet, daß**
- die Verstärkervorrichtung eine abnehmbaren, steifen akustischen Schalltrichter (7, 15, 20) aufweist, der mit Mitteln zur Befestigung am Mobiltelefon versehen ist,
- wobei die Innenfläche des Schalltrichters einem Tonsignal-Ausgang (19) des Mobiltelefons gegenüber liegt.

2. Mobiltelefon nach Anspruch 1, **dadurch gekennzeichnet, daß** der akustische Schalltrichter eine parabelförmige Krümmung (20) aufweist.

3. Mobiltelefon nach einem der Ansprüche 1 oder 2, **dadurch gekennzeichnet, daß** die Verstärkervorrichtung Nocken (17) und das Mobiltelefon Nuten (16) aufweist, wobei die Nocken in den Nuten gleiten.

4. Mobiltelefon nach einem der Ansprüche 1 bis 3, **dadurch gekennzeichnet, daß** die Verstärkervorrichtung eine Klammer (8, 21) aufweist, die das Mobiltelefon umschließt.

5. Mobiltelefon nach einem der Ansprüche 1 bis 4, **dadurch gekennzeichnet, daß** es einen Freisprech-Bausatz, insbesondere einen Fahrzeug-Bausatz, aufweist, der Nuten besitzt, wobei die Nocken der Verstärkervorrichtung in diesen Nuten gleiten, wobei eine der Flächen des Schalltrichters sich gegenüber dem Tonsignal-Ausgang des Freisprech-Bausatzes befindet.

6. Mobiltelefon nach einem der Ansprüche 1 bis 4, **dadurch gekennzeichnet, daß** es einen Freisprech-Bausatz, insbesondere einen Fahrzeug-Bausatz, aufweist, wobei die Verstärkervorrichtung eine Klammer aufweist, die den Freisprech-Bausatz umschließt, wobei eine der Flächen des Schalltrichters sich gegenüber dem Tonsignal-Ausgang des Freisprech-Bausatzes befindet.
